# EUROPEAN PATENT APPLICATION

(11) **EP 4 450 355 A1**
(43) Date of publication of application: **23.10.2024**
(21) Application number: 22905969.6
(22) Date of filing: 14.09.2022
(51) Int. Cl.: B60W 60/00

(54) **END-TO-END AUTOMATIC DRIVING CONTROL METHOD AND APPARATUS, ELECTRONIC DEVICE, AND STORAGE MEDIUM**

(30) Priority: 16.12.2021 CN 202111546186
(71) Applicant: Ningbo Lotus Robotics Co., Ltd., Ningbo, Zhejiang 315335 (CN)
(72) Inventor: XIONG, Jian, Wuhan, Hubei 430056 (CN)
(74) Representative: Zaboliene, Reda
(86) International application number: PCT/CN2022/118706
(87) International publication number: WO 2023/109216

(57) **Abstract**

An end-to-end automatic driving control method and apparatus, an electronic device, and a storage medium. The method comprises: if an object (B) is detected, obtaining position data and a fist travel data set of the object (B), determining a pre-travel route of the object (B) according to the position data and/or the first travel data set of the object (B); and if the pre-travel route matches a target travel route (1), controlling an accelerating apparatus to be in a non-working state.

## Description

### TECHNICAL FIELD

The present application relates to a field of automatic driving, in particularly to an end-to-end automatic driving control method, apparatus, electronic device and computer readable storage medium.

### DESCRIPTION OF RELATED ART

End-to-end Automatic driving (E2E) is an automatic driving function that can be implemented from the start to the end after a vehicle has set its destination. A planning control module in E2E can recognize objects around the vehicle according to the fusion information of sensors such as a high-precision map, a satellite positioning, a front-facing camera, a front-facing radar, a 360 round-looking system, an angle radar and a lidar in the perception system, including a type of the objects, a motion attribute of the objects, and a position of the objects relative to a vehicle. It can then plan a reasonable route according to identified objects, and associate a body system to control the vehicle to drive within a safe range as far as possible. Not only can a driver's eyes and hands be separated when the full function is opened, which greatly reduces the driving intensity of the driver. Moreover, even in the scene of an accident ahead, or in the scene of non-motorized vehicles or pedestrians breaking into the urban road, the vehicle can be controlled to slow down or avoid, and the accident can be avoided to the greatest extent.

At present, the E2E function can ensure the driving safety of the vehicle by using a sensing system, but as a highly automatic driving function, the comfort of the E2E is also a very important evaluation index. For example, when other vehicles cut into the lane at a close distance on the side, the E2E function can only adopt emergency avoidance or emergency deceleration strategies to ensure the safety of the vehicle, but cannot guarantee the comfort of the vehicle, which is easy to cause severe discomfort for drivers and passengers, and even require the driver to take over the vehicle to assist in controlling the vehicle.

### SUMMARY

The present application embodiment provides an end-to-end automatic driving control method, apparatus, electronic device and storage medium, which can ensure vehicle driving comfort and provide better and more comprehensive E2E functional performance without affecting driving safety. And no additional hardware is added, not only does it not need to increase the cost, but also can improve the function to improve the comfort of the driver and passenger.

The present application embodiment provides an end-to-end automatic driving control method, includes: obtaining a position data and a first travel data set of an object when the object is detected; determing a pre-travel route of the object according to the position data and/or the first travel data set of the object; controlling an accelerating apparatus to be in a non-working state when the pre-travel route matches a target travel route.

Further, controlling the accelerating apparatus to be in the non-working state when the pre-travel route matches the target travel route, includes: obtaining a second travel data set corresponding to a waiting route; when the pre-travel route matches the target travel route, controlling the accelerating apparatus to be in the non-working state and controlling a vehicle to enter the waiting route according to the second travel data set.

Further, the position data includes the first adjacent lane, the second adjacent lane and the non-motorized lane within the preset distance. A distance between the first adjacent lane and the target travel route is less than a distance between the second adjacent lane and the target travel route. The first travel data set includes a speed data, an acceleration data and a direction angle data of the object.

Further, determing the pre-travel route of the object according to the position data and/or the first travel data set of the object, includes: when the position data of the object is the first adjacent lane, and the direction angle data is greater than a preset angular threshold for lane change direction, determining the pre-travel route of the object to be the target travel route.

Further, determing the pre-travel route of the object according to the position data and/or the first travel data set of the object , includes: when the position data of the object is the second adjacent lane, and the speed data is within a preset lane change speed interval, and the acceleration data is within a preset lane change acceleration interval, and the direction angle data is within a preset lane change direction angle interval, determining the pre-travel route of the object to be the target travel route.

Further, determing the pre-travel route of the object according to the position data and/or the first travel data set of the object, includes: when the position data of the object is the non-motorized lane within the preset distance, determining the pre-travel route of the object to be the target travel route.

Accordingly, the present application embodiment provides an end-to-end automatic driving control apparatus, includes: an acquisition module, used to obtain a position data and a first travel data set of an object; a determination module, used to determine a pre-travel route of the object according to the position data and/or the first travel data set of the object; a control module, used to control an accelerating apparatus to be in a non-working state when the pre-travel route matches a target travel route.

Further, the control module includes: an obtaining unit, used to obtain a second travel data set corresponding to the waiting route; a control unit, used to control the accelerating apparatus to be in the non-working state and control a vehicle to enter the waiting route according to the second travel data set, when the pre-travel route matches the target travel route.

Further, the position data includes the first adjacent lane, the second adjacent lane and the non-motorized lane within the preset distance. A distance between the first adjacent lane and the target travel route is less than a distance between the second adjacent lane and the target travel route.

Further, the first travel data set includes a speed data, an acceleration data and a direction angle data of the object.

Further, the determination module is used to determine the pre-travel route of the object as the target travel route when the position data of the object is the first adjacent lane, and the direction angle data is greater than a preset angular threshold for lane change direction.

Further, the determination module is used to determine the pre-travel route of the object as the target travel route when the position data of the object is the second adjacent lane, and the speed data is within a preset lane change speed interval, and the acceleration data is within a preset lane change acceleration interval, and the direction angle data is within a preset lane change direction angle interval.

Further, the determining module is used to determine the pre-travel route of the object as the target travel route when the position data of the object is the non-motorized lane within the preset distance.

Accordingly, the present application embodiment also provides an electronic device includes a processor and a memory, the memory stores at least one instruction, at least one program, code set, or an instruction set, and the at least one instruction, the at least one program, the code set or the instruction set is loaded and executed by a processor to achieve the end-to-end automatic driving control method described above.

Accordingly, the present application embodiment also provides a computer readable storage medium, the storage medium stores at least one instruction, at least one program, a code set or an instruction set, and the at least one instruction, the at least one program, the code set or the instruction set is loaded and executed by a processor to achieve the end-to-end automatic driving control method described above.

The present application embodiment has the following beneficial effects:

The end-to-end automatic driving control method, apparatus, electronic device and storage medium disclosed in the present application embodiment include: obtaining a position data and a first travel data set of an object when the object is detected, and determing a pre-travel route of the object according to the position data and/or the first travel data set of the object; controlling an accelerating apparatus to be in a non-working state when the pre-travel route matches a target travel route. According to the present application embodiment, the addition of comfort control strategy in E2E can ensure vehicle driving comfort without affecting driving safety, and can provide better and more comprehensive E2E functional performance. And no additional hardware is added, not only does it not need to increase the cost, but also can improve the function to improve the comfort of the driver and passenger.

### BRIEF DESCRIPTION OF THE DRAWINGS

In order to more clearly state the technical proposals and advantages in the embodiments of the present application or the prior art, a brief introduction to the drawings required to be used in the description of the embodiments or a prior art is presented below. Obviously, the accompanying drawings in the following description only show part of the embodiments of the present application. For those of ordinary skill in the art, it is possible to obtain other drawings according to these drawings without creative work.
FIG. 1 is a schematic diagram of an application environment provided by the embodiment of the present application.
FIG. 2 is a flow diagram of an end-to-end automatic driving control method provided by the present application embodiment.
FIG. 3 is a schematic diagram of the target travel route of an object pre-entering a self-vehicle on a highway or elevated road provided by the present application embodiment.
FIG. 4 is a schematic diagram of another object pre-entering the target travel route of a self-vehicle on a highway or elevated road provided by the present application embodiment.
FIG. 5 is a schematic diagram of the target travel route of another object pre-entering a self-contained vehicle on a non-motorized lane provided by the present application embodiment.
FIG. 6 is a structural diagram of an end-to-end automatic driving control apparatus provided in the present application embodiment.

### DETAILED DESCRIPTION OF THE EMBODIMENTS

In order to make the purpose, technical proposal and advantages of the present application more clear, the embodiments of the present application will be further described in detail in combination with the attached drawings. Obviously, the embodiments described are only one embodiment of the present application and not all embodiments. According to the embodiments in the present application, all other embodiments acquired by a person of ordinary skill in the field without creative labor are within the scope of protection in the present application.

"Embodiments" herein refer to specific features, structures or characteristics that may be included in at least one realization of the present application. In the description of the embodiments of the present application, it is to be understood that the terms "first" and "second" are used for descriptive purposes only and are not to be understood as indicating or implying relative importance or as implicitly indicating the quantity of the technical features indicated. Thus, a feature defined as "first" or "second" may explicitly or implicitly include one or more such features. Furthermore, the terms "first", "second", etc., are used to distinguish similar objects and are not necessarily used to describe a particular order or precedence. It should be understood that the data so used are interchangeable where appropriate so that the embodiments of the present application described herein can be implemented in an order other than that illustrated or described herein. Furthermore, the terms "including," "having," and "for," and any variation thereof, are intended to cover non-exclusive inclusion.

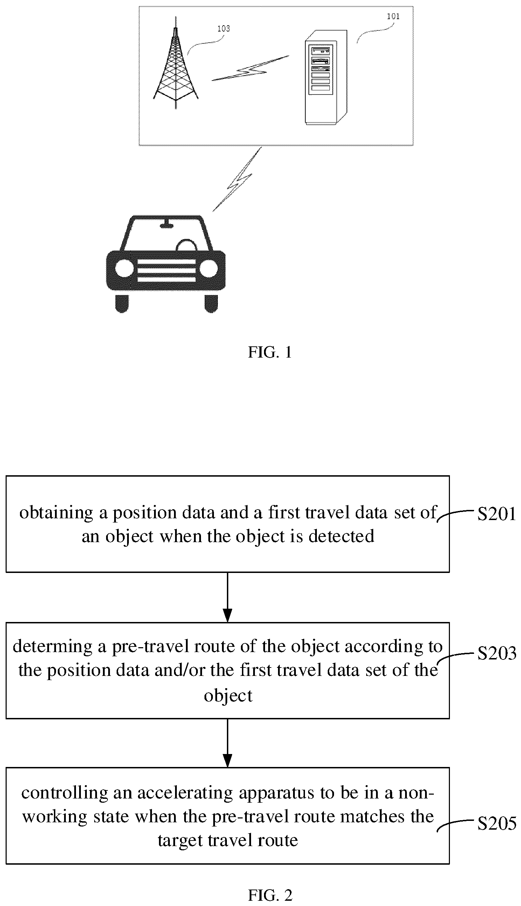

Please refer to FIG. 1, which shows a schematic diagram of an application environment provided by the embodiment of the present application, including: a vehicle server 101 and a vehicle awareness module 103, when the vehicle server 101 detects the object, it can obtain a position data and a first travel data set of an object according to the vehicle awareness module 103. And according to position data and/or the first travel data set of the object, determine the object's a pre-travel route, when the pre-travel route matches a target travel route, controlling an accelerating apparatus to be in a non-working state.

In the embodiments of the present application, the addition of a comfort control strategy in E2E can ensure vehicle driving comfort without affecting driving safety and provide better and more comprehensive E2E functional performance. And no additional hardware is added, which not only needs to increase the cost, but also can improve the function to improve the comfort of the driver and passenger.

The following is a specific embodiment of an end-to-end automatic driving control method in the present application. FIG. 2 is a flow diagram of an end-to-end automatic driving control method provided by the present application embodiment. This specification provides the procedure steps as shown in embodiments or flowcharts, but may include more or fewer steps according to routine or uncreative labor. The sequence of steps listed in the embodiment is only one of many execution sequences and does not represent the only execution sequence. In actual execution, it can be executed sequentially or in parallel according to the embodiments or the methods shown in the attached drawings (for example, in a parallel processor or multi-threaded processing environment). As shown in FIG. 2, the method includes:

S201: obtaining a position data and a first travel data set of an object when the object is detected.

In present application embodiment, the object may be other vehicles within several lanes around a self-vehicle. For example, the other vehicles in a first adjacent lane, That's the other vehicles in an adjacent lane, another example is the other vehicles in the second adjacent lane, that is, the other vehicles in an interval lane, or a pedestrian or a non-motorized vehicle in a non-motorized lane or a walking road, or other things that have no impact on the self-vehicle driving at present but may have an impact on the self-vehicle driving in the future. When the vehicle server detects the object, it can obtain the position data and first travel data of the object according to a vehicle awareness module, a positioning module and a high-precision map module. The position data can include the first adjacent lane, the second adjacent lane, and the non-motorized lane within a preset distance, a distance between the first adjacent lane and the target travel route is less than a distance between the second adjacent lane and the target travel route, and the first travel data set can include a speed data, an acceleration data and a direction angle data of the object.

Optionally, the vehicle awareness module, the positioning module and the high-precision map module can collect and output a position information of the self-vehicle. A current driving lane information of the self-vehicle is a target travel route and a movement information. The vehicle awareness module, the positioning module and the high-precision map module can also collect and output the position data of the object, a transverse and longitudinal motion information is the speed data and the acceleration data, and a body attitude information is the direction angle data. The vehicle awareness module, the positioning module and the high-precision map module can also collect and output the movement information of the pedestrians or the non-motorized vehicles in the non-motorized lanes or the walking routes.

S203 : determing a pre-travel route of the object according to the position data and/or the first travel data set of the object.

In the present application embodiment, the vehicle server may determine the pre-travel route of the object according to the object's position data and/or the first travel data set.

In an alternative embodiment, when the position data of the object is the first adjacent lane and the direction angle data is greater than the preset angular threshold for lane change direction, the vehicle server can determine the object's pre-travel route as the target travel route. That is, the preset angular threshold for lane change direction can be set in advance. The self-vehicle is a target driving lane according to a target travel route. When the object is located in a left adjacent lane or a right adjacent lane of the target driving lane, and a driving direction of the object is offset to the target driving lane, and an offset angle is greater than a preset angular threshold for lane change direction, determing the pre-travel route of the object as the target travel route of the self-vehicle.

Assume that the target driving lane of the self-vehicle is the second lane, set the preset angular threshold for lane change direction of 3°, and the object is located in the right adjacent lane of the target driving lane. At a certain moment, according to the vehicle awareness module, the positioning module and the high-precision map module, the driving lane of the object collected by the self-vehicle is the first lane, which is located on the right side of the second driving lane and is not separated from the second driving lane. Moreover, the collected direction angle data of the driving direction of the object deviated from the target driving lane is 4°, and the pre-travel route of the object can be determined as the target travel route of the self-vehicle. That is, the judging object is about to make a close cut into the target driving lane.

In an alternative embodiment, when the position data of the object is the second adjacent lane, the speed data is within the preset lane change speed interval, the acceleration data is within the preset lane change acceleration interval, and the direction angle data is within the preset lane change direction angle interval, determing the pre-travel route of the object as the target travel route. That is, a preset lane change speed interval, a preset lane change acceleration interval and a preset lane change direction angle interval can be set in advance, and the lane driven by the self-vehicle according to the target travel route is the target driving lane. when the object is located in the left or right interval lane of the target driving lane, the object's speed and acceleration are within the preset lane change speed interval. And the driving direction of the object is offset to the target driving lane, and the offset angle is within the preset lane change direction angle, it can be determined that the pre-travel route of the object is the target travel route of the self-vehicle.

Assuming that the target driving lane of the self-vehicle is the first driving lane, preset lane change speed interval [60km/h,80km/h], preset lane change acceleration interval [10m/s²,12m/ s²] and preset lane change direction angle interval [10°,20°] are set. At a certain moment, the driving lane of the object collected by the self-vehicle according to the vehicle awareness module, the positioning module and the high-precision map module is a third driving lane, which is located on the left side of the first driving lane, and the second driving lane is separated from the first driving lane. Besides, the longitudinal speed of the object collected is 60km/h, and the lateral acceleration is 10m/s². Moreover, the direction angle data of the deviation from the driving direction to the target driving lane is 18°, and the pre-travel route of the object can be judged as the target travel route of the self-vehicle, that is, the object can be determined to pre-continuously change lanes and cut into the target driving lane.

In another alternative embodiment, when the object's position data is the non-motorized lane within a preset distance, determing the object's pre-travel route as the target travel route.

S205 : controlling an accelerating apparatus to be in a non-working state when the pre-travel route matches the target ravel route.

In the present application embodiment, the vehicle server can obtain a second travel data set corresponding to a waiting route. When the pre-travel route matches the target travel route, controlling the accelerating apparatus to be in a non-working state and controlling the vehicle to enter the waiting route according to the second travel data set.

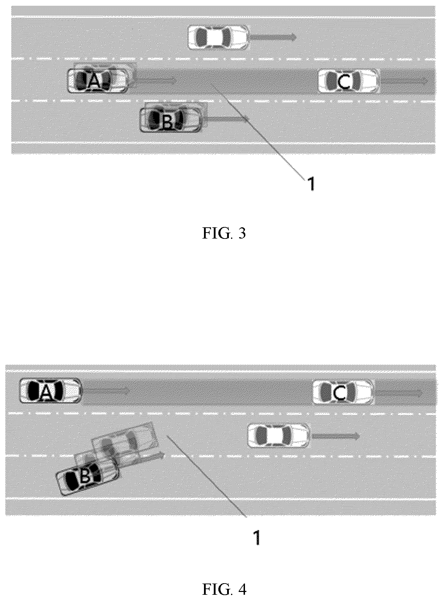

FIG. 3 is a schematic diagram of the target travel route of an object pre-entering a self-vehicle on a highway or elevated road provided by the present application embodiment. A self-vehicle A drives according to the target travel route 1. The self-vehicle A detects that there is an object B on the right side of the self-vehicle A, that is, other vehicles that have no impact on the running of the self-vehicle A at present but may have an impact on the running of the self-vehicle A in the future.

In the existing E2E control strategy, when the object B does not enter the target travel route 1, the following target of the self-vehicle A is an other vehicle C, a safe distance is maintained between the vehicle A and the other vehicle C, and the other vehicle C does not slow down, brake and other operations, E2E does not do any processing, until the object B enters the target travel route 1, the self-vehicle A picks up the object B as the latest following target. In this case, the distance between the object B and the self-vehicle A is less than the safe distance, As A result, the self-vehicle A needs to trigger E2E to adopt an emergency control policy to avoid security risks. Among them, the emergency control strategy can include emergency braking or emergency steering. The emergency control strategy takes safety as the consideration standard, and comfort cannot be guaranteed, which will inevitably cause tension and discomfort for drivers and passengers.

In the present application embodiment, when the vehicle server detects the object B according to the vehicle awareness module, the positioning module and the high-precision map module, when the position data of the object B is determined to be the first adjacent lane and the direction angle data is greater than the preset angular threshold for lane change direction, the vehicle server can determine the pre-travel route of the object as the target travel route. That is, when the object B in the adjacent lane to the right of the target driving lane where the self-vehicle A is located is offset to the left, even if the object B does not enter the lane corresponding to the target travel route 1, It is also determined that the object B will enter the lane corresponding to the target travel route 1 of the self-vehicle A from the right. At this time, the vehicle server of the self-vehicle A will trigger E2E to adopt a comfort control strategy. Release the accelerator of the self-vehicle A, or release the accelerator and control the brake pedal to slow down, or release the accelerator and control the brake pedal to slow down and shift to the left side to enter the left lane. Under the comfort control strategy adopted by E2E, even if the object B enters the lane corresponding to the target travel route 1 of the self-vehicle A from the right, the self-vehicle A has sufficient time and distance to control the vehicle, so as to ensure the safe running of the vehicle and improve the driving comfort of the driver and passengers. When the object B finishes cutting or returns to its original lane, the self-vehicle A can resume its original motion state.

FIG. 4 is a schematic diagram of another object pre-entering the target travel route of a self-vehicle on a highway or elevated road provided by the present application embodiment. The self-vehicle A drives according to the target travel route 1. The self-vehicle A detects that there is the object B on the right side of the self-vehicle A, that is, other vehicles that have no impact on the running of the self-vehicle A at present but may have an impact on the running of the self-vehicle A in the future.

In the existing E2E control strategy, when the object B does not enter the target travel route 1, the following target of the self-vehicle A is the other vehicle C, the safe distance is maintained between the self-vehicle A and the other vehicle C, and the other vehicle C does not slow down, brake and other operations, E2E does not do any processing, until the object B enters the target travel route 1, the self-vehicle A picks up the object B as the latest following target. In this case, the distance between the object B and the self-vehicle A is less than the safe distance, As A result, the self-vehicle A needs to trigger E2E to adopt an emergency control strategy to avoid security risks. Among them, the emergency control strategy can include emergency braking or emergency steering. The emergency control strategy takes safety as the consideration standard, and comfort cannot be guaranteed, which will inevitably cause tension and discomfort for drivers and passengers.

In the embodiment of the present application, when the vehicle server detects the object B according to the vehicle awareness module, the positioning module and the high-precision map module, when the position data of the object B is determined to be the second adjacent lane, and the speed data is within the preset lane change speed interval, and the acceleration data is within the preset lane change acceleration interval, and the direction angle data is within the preset lane change direction angle interval, determine the pre-travel route of the object as the target travel route. That is, when the object B in the right interval lane of the target driving lane where the self-vehicle A is located is detected to the left continuously offset, even if the object B does not enter the lane corresponding to the target travel route 1, it is determined that object B will enter the lane corresponding to the target travel route 1 of the self-vehicle A from the right. At this time, the vehicle server of the self-vehicle A will trigger E2E to adopt a comfort control strategy. Release the accelerator of the self-vehicle A, or release the accelerator and control the brake pedal to slow down, or release the accelerator and control the brake pedal to slow down and shift to the left side to enter the left lane. Under the comfort control strategy adopted by E2E, even if the object B enters the lane corresponding to the target travel route 1 of the self-vehicle A from the right, the self-vehicle A has sufficient time and distance to control the vehicle, so as to ensure the safe running of the vehicle and improve the driving comfort of the driver and passengers. When the object B finishes cutting or returns to its original lane, self-vehicle A can resume its original motion state.

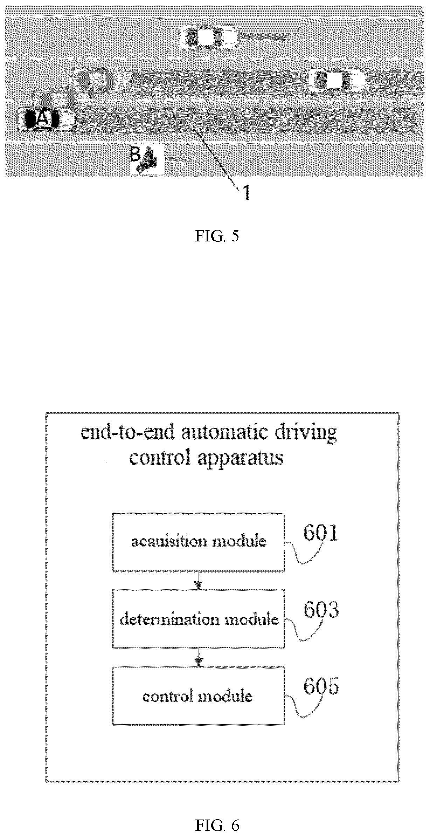

FIG. 5 is a schematic diagram of the target travel route of another object pre-entering a self-contained vehicle on a non-motorized lane provided by the present application embodiment. The self-vehicle A drives according to the target travel route 1. The self-vehicle A detects that there is the object B on the right side of the self-vehicle A, that is, other vehicles that have no impact on the running of the self-vehicle A at present but may have an impact on the running of the self-vehicle A in the future.

In the existing E2E control strategy, when the object B does not enter the target travel route 1, E2E does not do any processing until the object B enters the target travel route 1, and the self-vehicle A picks up object B as the following target. In this case, the driving operation of the object B must be predictable, and the distance between the object B and the self-vehicle A is less than the safe distance, As A result, the self-vehicle A needs to trigger E2E to adopt an emergency control strategy to avoid safety risks. Among them, the emergency control strategy can include emergency braking or emergency steering. The emergency control strategy takes safety as the consideration standard, and comfort cannot be guaranteed, which will inevitably cause tension and discomfort for drivers and passengers.

In the embodiment of the present application, when the vehicle server detects the object B according to the vehicle awareness module, the positioning module and the high-precision map module, when the position data of the object B is determined to be the non-motorized lane within the preset distance, the pre-travel route of the object is determined to be the target travel route. That is, when the object B is detected in the non-motorized lane on the right of the target driving lane of the self-vehicle A, even if the object B does not enter the lane corresponding to the target travel route 1, it is determined that the object B will enter the lane corresponding to the target travel route 1 of the self-vehicle A from the right. At this time, the vehicle server of the self-vehicle A will trigger E2E to adopt a comfortable control strategy and release the accelerator of the vehicle, or release the accelerator and control the brake pedal to slow down, or release the accelerator and control the brake pedal to slow down and shift to the left into the left lane. Under the comfort control strategy adopted by E2E, even if the object B enters the lane corresponding to the target travel route 1 of the self-vehicle A from the right, the self-vehicle A has sufficient time and distance to control the vehicle, so as to ensure the safe running of the vehicle and improve the driving comfort of the driver and passengers. When the object B finishes cutting or returns to its original lane, the self-vehicle A can resume its original motion state.

By adopting the end-to-end automatic control method provided in the present application embodiment and adding a comfort control strategy to E2E, the vehicle driving comfort can be ensured without affecting the driving safety, and better and more comprehensive E2E functional performance can be provided. And no additional hardware is added, not only does it not need to increase the cost, but also can improve the function to improve the comfort of the driver and passenger.

The present application embodiment also provides an end-to-end automatic driving control apparatus. FIG. 6 is a structural diagram of an end-to-end automatic driving control apparatus provided in the present application embodiment, as shown in FIG. 6. The device may include:

An acquisition module 601, used to obtain the position data and the first travel data set of the object;

A determination module 603, used to determine the pre-travel route of the object according to the position data and/or the first travel data set of the object;

A control module 605, used to control the accelerating apparatus to be in a non-working state when the pre-travel route matches the target travel route.

In the present application embodiment, the control module 605 May include:

An obtaining unit, used to obtain the second travel data set corresponding to the waiting route.

A control unit, used to control the accelerating apparatus to be in the non-working state and control the vehicle to enter the waiting route according to the second travel data set, when the pre-travel route matches the target travel route.

In the embodiment of the present application, the position data includes the first adjacent lane, the second adjacent lane and the non-motorized lane within the preset distance, and the distance between the first adjacent lane and the target travel route is less than the distance between the second adjacent lane and the target travel route.

The first travel data set includes the speed data, the acceleration data and the direction angle data of the object.

In the present application embodiment, the determine module 603 is used to determine the pre-travel route of the object as the target travel route when the position data of the object is the first adjacent lane and the direction angle data is greater than the preset angular threshold for lane change direction.

In the present application embodiment, the determination module 603 can be used to determine the pre-travel route of the object as the target travel route when the position data of the object is the second adjacent lane, and the speed data is within the preset lane change speed interval, and the acceleration data is within the preset lane change acceleration interval, and the direction angle data is within the preset lane change direction angle interval.

In the present application embodiment, the determination module 603 can be used to determine the pre-travel route of the object as the target travel route when the position data of the object is the non-motorized lane within the preset distance.

The device and method embodiments in the present application are according to the same application idea.

By using the end-to-end automatic driving control apparatus provided in the present application embodiment, adding a comfort control strategy in E2E can ensure vehicle driving comfort without affecting driving safety and provide better and more comprehensive E2E functional performance. And no additional hardware is added, not only does it not need to increase the cost, but also can improve the function to improve the comfort of the driver and passenger.

The present application embodiment also provides an electronic device. The electronic device may be arranged in a server to hold at least one instruction, at least one program, code set or instruction set associated with the implementation of an end-to-end automatic driving control method in an embodiment of the method, and the at least one instruction, the at least one program, the code set or instruction set is loaded by the memory and executed to implement the end-to-end automatic driving control method.

The present application embodiment also provides a storage medium. The storage medium may be arranged in the server to hold at least one instruction, at least one program, code set or instruction set related to the implementation of an end-to-end automatic driving control method in the method embodiment, and the at least one instruction, the at least one program, the code set or instruction set is loaded and executed by the processor to implement the end-to-end automatic driving control method.

Optionally, in present embodiment, the storage medium may be located on at least one of the multiple network servers of the computer network. Optionally, in this embodiment, the storage medium may include, but are not limited to, a variety of media that can store program code, such as a USB flash drive, Read-only Memory (ROM), portable hard disk, magnetic disk, or optical disc.

As can be seen from the above embodiments of the end-to-end automatic driving control method, apparatus, electronic device or storage medium provided in the present application, the method in the present application includes, obtaining a position data and a first travel data set of an object when the object is detected, and determing a pre-travel route of the object according to the position data and/or the first travel data set of the object; controlling an accelerating apparatus to be in a non-working state when the pre-travel route matches a target travel route. According to the present application embodiment, the addition of comfort control strategy in E2E can ensure vehicle driving comfort without affecting driving safety, and can provide better and more comprehensive E2E functional performance. And no additional hardware is added, not only does it not need to increase the cost, but also can improve the function to improve the comfort of the driver and passenger.

In the present application, unless otherwise expressly specified and limited, the terms "connected", "connected" and other terms shall be understood broadly, for example, can be fixed connections, can be detachable connections, or integrated; Can be mechanical connection, can also be electrical connection; It can be directly connected, it can be indirectly connected through an intermediate medium, it can be connected within two components or the interaction between two components. For ordinary skilled persons in the art, the specific meaning of the above terms in the present application can be understood according to the specific circumstances.

It should be noted that the above order of embodiments of the present application is only for description, and does not represent the merits of embodiments, and the above specification describes specific embodiments, and other embodiments are also within the scope of the attached claims. In some cases, the actions or steps described in the claims may be performed in a sequence of different embodiments and achieve the desired result. In addition, the process depicted in the accompanying diagram does not necessarily require a specific sequence or connection sequence to achieve the desired result, and in some embodiments, multitasking is also possible or may be advantageous.

Each embodiment in this specification is described in a progressive manner, and the same and similar parts of each embodiment can be referred to each other. Each embodiment focuses on the differences from other embodiments. In particular, for the embodiment of the device, because it is according to a similar method embodiment, the description is relatively simple, and the relevant points can be referred to the partial description of the method embodiment.

The above is the preferred embodiment of the application, and it should be noted that for ordinary technicians in the technical field, without deviating from the principle of the application, a number of improvements and refinements can be made, and these improvements and refinements are also considered as the scope of protection of the application.

## Claims

1. An end-to-end automatic driving control method, **characterized in that**, the method comprises:
obtaining a position data and a first travel data set of an object when the object is detected;
determing a pre-travel route of the object according to the position data and/or the first travel data set of the object;
controlling an accelerating apparatus to be in a non-working state when the pre-travel route matches a target travel route.

2. The end-to-end automatic driving control method according to claim **1, characterized in that**, controlling the accelerating apparatus to be in the non-working state when the pre-travel route matches the target travel route, comprises:
obtaining a second travel data set corresponding to a waiting route;
when the pre-travel route matches the target travel route, controlling the accelerating apparatus to be in the non-working state and controlling a vehicle to enter the waiting route according to the second travel data set.

3. The end-to-end automatic driving control method according to claim **1, characterized in that**, the position data comprises a first adjacent lane, a second adjacent lane and a non-motorized lane within a preset distance;
a distance between the first adjacent lane and the target travel route is less than a distance between the second adjacent lane and the target travel route;
the first travel data set comprises a speed data, an acceleration data and a direction angle data of the object.

4. The end-to-end automatic driving control method according to claim **3, characterized in that**, determing the pre-travel route of the object according to the position data and/or the first travel data set of the object, comprises:
when the position data of the object is the first adjacent lane, and the direction angle data is greater than a preset angular threshold for lane change direction, determining the pre-travel route of the object to be the target travel route.

5. The end-to-end automatic driving control method according to claim **3, characterized in that**, determing the pre-travel route of the object according to the position data and/or the first travel data set of the object, comprises:
when the position data of the object is the second adjacent lane, and the speed data is within a preset lane change speed interval, and the acceleration data is within a preset lane change acceleration interval, and the direction angle data is within a preset lane change direction angle interval, determining the pre-travel route of the object to be the target travel route.

6. The end-to-end automatic driving control method according to claim **3, characterized in that**, determing the pre-travel route of the object according to the position data and/or the first travel data set of the object, comprises:
when the position data of the object is the non-motorized lane within the preset distance, determining the pre-travel route of the object to be the target travel route.

7. An end-to-end automatic driving control apparatus, **characterized in that**, comprises:
an acquisition module, used to obtain a position data and a first travel data set of an object;
a determination module, used to determine a pre-travel route of the object according to the position data and/or the first travel data set of the object;
a control module, used to control an accelerating apparatus to be in a non-working state when the pre-travel route matches a target travel route.

8. The end-to-end automatic driving control apparatus according to claim **7, characterized in that**, the control module, comprises:
an obtaining unit, used to obtain a second travel data set corresponding to a waiting route;
a control unit, used to control the accelerating apparatus to be in the non-working state and control a vehicle to enter the waiting route according to the second travel data set, when the pre-travel route matches the target travel route.

9. An electronic device, **characterized in that**, the electronic device comprises a processor and a memory, the memory stores at least one instruction, at least one program, a code set, or an instruction set, and the at least one instruction, the at least one program, the code set or the instruction set is loaded and executed by a processor to achieve the end-to-end automatic driving control method described in any of claims **1-6.**

10. A computer readable storage medium, **characterized in that**, the storage medium stores at least one instruction, at least one program, a code set or an instruction set, and the at least one instruction, the at least one program, the code set or the instruction set is loaded and executed by a processor to achieve the end-to-end automatic driving control method described in any of claims **1-6.**
